(19) Europäisches Patentamt
European Patent Office
Office européen des brevets

(11) **EP 4 628 945 A1**

(12) **EUROPEAN PATENT APPLICATION**
published in accordance with Art. 153(4) EPC

(43) Date of publication:
08.10.2025 Bulletin 2025/41

(21) Application number: 23896917.4

(22) Date of filing: 01.12.2023

(51) International Patent Classification (IPC):
*G01V 1/00* $^{(2024.01)}$

(52) Cooperative Patent Classification (CPC):
G01V 1/00; G01V 1/18; G01V 1/22

(86) International application number:
PCT/CN2023/135746

(87) International publication number:
WO 2024/114775 (06.06.2024 Gazette 2024/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 01.12.2022 CN 202211533927

(71) Applicants:
• China Petroleum & Chemical Corporation
Beijing 100728 (CN)

• Sinopec Geophysical Research Institute Co., Ltd.
Nanjing, Jiangsu 211103 (CN)

(72) Inventors:
• HONG, Chengyu
Nanjing, Jiangsu 211103 (CN)
• SONG, Zhixiang
Nanjing, Jiangsu 211103 (CN)
• YANG, Shangqin
Nanjing, Jiangsu 211103 (CN)

(74) Representative: karo IP
Patentanwälte PartG mbB
Steinstraße 16-18
40212 Düsseldorf (DE)

(54) **SAMPLING DATA MANAGEMENT METHOD FOR SEISMOGRAPH, SEISMOGRAPH, AND STORAGE MEDIUM**

(57) The present disclosure relates to a seismograph, which includes: a crystal oscillator for generating a local clock signal; a data acquisition unit, coupled to the crystal oscillator and configured to acquire sampled data based on the local clock signal, and the data acquisition unit is further configured to acquire a fixed amount of sampled data within each period of the clock signal; a reference clock receiver for receiving a reference clock signal; and a controller, which is coupled to the data acquisition unit and the reference clock receiver and processes the sampled data. In addition, the present disclosure also relates to a method for managing sampled data of a seismograph, a controller, a non-transitory machine-readable storage medium, and a program product.

200

FIG. 2

## Description

**Technical Field**

The present disclosure relates to the technical field of seismic exploration, and particularly to a method for managing seismograph sampled data, a seismograph, and a storage medium.

**Background**

Seismic exploration generally uses a seismic energy source to generate an excitation signal. This excitation signal propagates into the ground and is partially reflected by underground seismic reflectors (i.e., interfaces between underground rock layers or fluid layers with different properties). The reflected signals are measured and recorded by seismic acquisition nodes located on or near the ground. Subsequently, the recorded reflected signals can be processed to obtain information about the stratum and the stratum interface.

Today, the front-end acquisition nodes of large-scale seismic exploration networks consist of many distributed acquisition nodes. These nodes are required to sample the same excitation signal at the same time; otherwise, the measurement results will be affected. Therefore, it is particularly important for seismic acquisition instruments to achieve high-precision synchronous acquisition.

A seismograph is the most commonly used seismic acquisition instrument in seismic exploration. Seismographs commonly employ GPS satellite-based timing as the synchronization source for their time service systems during synchronous data acquisition. Specifically, a local clock, such as a real-time clock (RTC), is included in the seismograph. The timing provided by the global positioning system (GPS) module is used as a reference clock to calibrate the local clock in the seismograph, and then the seismograph performs signal acquisition based on the local clock signal to achieve synchronous acquisition.

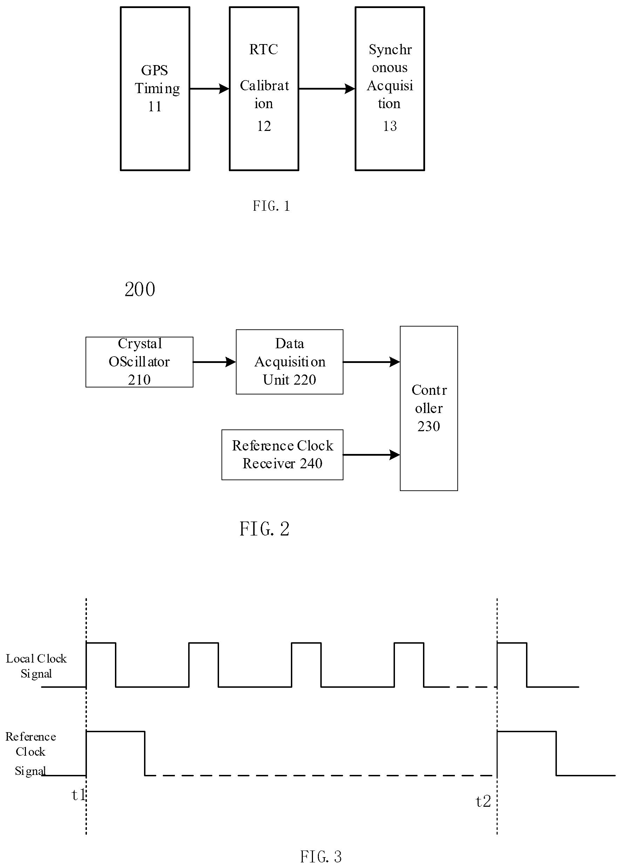

Refer to Figure 1, which shows the synchronous calibration and acquisition method for a seismograph in the prior art. The receiving unit in the seismograph receives the GPS timing signal from the GPS (indicated by reference sign 11 in the figure), calibrates the real-time clock based on the GPS timing signal (indicated by reference sign 12 in the figure), and then the seismograph performs synchronous signal acquisition based on the calibrated clock signal (indicated by reference sign 13 in the figure).

In practical applications, a wireless receiver (such as a GPS receiver) is required to continuously operate to receive the reference clock signal from the GPS to calibrate the local real-time clock RTC. However, a continuously operating GPS receiver will result in high power consumption, which cannot meet the low-power requirements of seismographs.

To overcome this defect, Chinese Patent Publication CN101836132A discloses a wireless seismic data acquisition unit with a wireless receiver that provides a GPS time reference shared by multiple wireless seismic data acquisition units in a seismic system. The wireless receiver operates intermittently, accesses the GPS time reference in a noncontinuous manner, and calibrates the local clock based on the GPS time reference. After calibration, the wireless receiver is set to a low-power non-operating state to save the battery power of the seismic acquisition unit.

However, the technical solution disclosed in CN101836132A still requires a local clock module (i.e., RTC) to provide the local clock signal, and the local clock module (RTC) is calibrated by the common time reference (GPS time reference) to provide an accurate local clock signal. Therefore, in the presence of an RTC, it still leads to high power consumption.

**Summary**

The objective of the technical solution of the present disclosure is to provide a method and device for managing seismograph sampled data, seismograph, and storage medium that can further reduce the power consumption of the seismograph while maintaining its synchronous acquisition.

The first aspect of the present disclosure provides a seismograph, comprising:

a crystal oscillator configured to generate a local clock signal;
a data acquisition unit, coupled to the crystal oscillator and configured to acquire sampled data based on the local clock signal, and the data acquisition unit further configured to acquire a fixed amount of sampled data within each period of the clock signal;
a reference clock receiver configured to receive a reference clock signal; and
a controller coupled to the data acquisition unit and the reference clock receiver, and configured to:

receive the sampled data from the data acquisition unit;

calculate the actual amount of sampled data since the last time the reference clock receiver was started and the previous reference clock signal was received;

determine whether the actual amount reaches a threshold;

in response to the actual amount reaching the threshold, start the reference clock receiver and receive a new reference clock signal from the reference clock receiver;

determine the reference amount of sampled data based on the new reference clock signal and the previous reference clock signal; and

process the sampled data so that the amount of the processed sampled data corresponds to the reference amount.

The seismograph according to the first aspect of the disclosure, wherein processing the sampled data comprises:

in response to the actual amount being greater than the reference amount, removing part of the sampled data so that the amount of the processed sampled data is equal to the reference amount;

in response to the actual amount being less than the reference amount, supplementing the sampled data so that the amount of the processed sampled data is equal to the reference amount; and

in response to the actual amount being equal to the reference amount, not processing the sampled data.

The seismograph according to the first aspect of the disclosure, wherein:

removing the sampled data comprises: uniformly removing the sampled data, randomly removing the sampled data, or sequentially removing the sampled data from the last-received sampled data; and

supplementing the sampled data comprises: supplementing the sampled data based on the slope or fitting curve of the sampled data, or supplementing the sampled data based on the average, median, final value, arithmetic difference, or three-line difference of a specific amount of sampled data.

The seismograph according to the first aspect of the disclosure wherein the controller is further configured to: start the reference clock receiver and receive the reference clock signal from the reference clock receiver when the seismograph is started or begins to acquire data.

The seismograph according to the first aspect of the disclosure, wherein the controller is further configured to: determine the threshold based on accuracy of the crystal oscillator, frequency of the local clock signal generated by the crystal oscillator, and the synchronization accuracy requirements of the seismograph.

The seismograph according to the first aspect of the disclosure, wherein the controller is further configured to: after processing the sampled data so that the amount of the processed sampled data corresponds to the reference amount, turn off the reference clock receiver or put it in a low-power state.

The seismograph according to the first aspect of the disclosure, wherein the crystal oscillator is a temperature-compensated crystal oscillator or an oven-controlled crystal oscillator.

The seismograph according to the first aspect of the disclosure, wherein the reference clock signal is a timing signal of a navigation system or a 5G network timing signal.

The seismograph according to the first aspect of the disclosure, wherein the controller is a single-threaded controller, which receives the sampled data in a first interrupt, receives the reference clock signal in a second interrupt, and determines the processing of the sampled data in a third interrupt, and the priority of the second interrupt is the highest.

The seismograph according to the first aspect of the disclosure, wherein the data acquisition unit is an ADC converter, which is configured to use the local clock signal as a clock source, and the ADC converter is triggered and acquires one sampled data when the rising edge of each clock signal arrives.

The second aspect of the present disclosure provides a method for managing sampled data of a seismograph, comprising:

receiving sampled data, which is acquired by a data acquisition unit based on a local clock signal generated by a crystal oscillator in the seismograph, wherein the amount of sampled data obtained within each period of the local clock signal is fixed;

calculating the actual amount of sampled data since the last time the reference clock receiver was started and the previous reference clock signal was received;

determining whether the actual amount reaches a threshold;

in response to the actual amount reaching the threshold, starting the reference clock receiver to receive a new reference clock signal from the reference clock receiver;

determining a reference amount of sampled data based on the new reference clock signal and the previous reference clock signal; and

processing the sampled data so that the amount of the processed sampled data corresponds to the reference amount.

The method for managing sampled data according to the second aspect of the disclosure, wherein processing the sampled data comprises:

in response to the actual amount being greater than the reference amount, removing part of the sampled data so that the amount of the processed sampled data is equal to the reference amount;
in response to the actual amount being less than the reference amount, supplementing the sampled data so that the amount of the processed sampled data is equal to the reference amount; and
in response to the actual amount being equal to the reference amount, not processing the sampled data.

The method for managing sampled data according to the second aspect of the disclosure, wherein:

removing the sampled data comprises: uniformly removing the sampled data, randomly removing the sampled data, or sequentially removing the sampled data from the last-received sampled data; and
supplementing the sampled data comprises: supplementing the sampled data based on the slope or fitting curve of the sampled data, or supplementing the sampled data based on the average, median, final value, arithmetic difference, or three-line difference of a specific amount of sampled data.

The method for managing sampled data according to the second aspect of the disclosure further comprises: starting the reference clock receiver and receive the reference clock signal from the reference clock receiver when the seismograph is started or begins to acquire data.

The method for managing sampled data according to the second aspect of the disclosure further comprises: determining the threshold based on accuracy of the crystal oscillator, frequency of the local clock signal generated by the crystal oscillator, and the synchronization accuracy requirements of the seismograph.

The method for managing sampled data according to the second aspect of the disclosure, wherein the controller is further configured to: after processing the sampled data so that the amount of the processed sampled data corresponds to the reference amount, turn off the reference clock receiver or put it in a low-power state.

The method for managing sampled data according to the second aspect of the disclosure, wherein the reference clock signal is a timing signal of a navigation system or a 5G network timing signal.

The method for managing sampled data according to the second aspect of the disclosure, wherein the method is executed in a single-threaded manner, the sampled data is received in a first interrupt, the reference clock signal is received in a second interrupt, and the processing of the sampled data is determined in a third interrupt, and the priority of the second interrupt is the highest.

The third aspect of the disclosure provides a controller, comprising:

A processor; and
A non-transitory machine-readable storage medium having computer program instructions stored thereon, which, when executed by the processor, cause the processor to implement the method according to the second aspect of the disclosure.

The fourth aspect of the disclosure provides a non-transitory machine-readable storage medium having computer program instructions stored thereon, which, when executed by a processor, cause the processor to implement the method according to the second aspect of the disclosure.

The fifth aspect of the disclosure provides a program product having computer program instructions, which, when executed by a processor, cause the processor to implement the method according to the second aspect of the disclosure.

The sixth aspect of the disclosure provides a seismic data acquisition system, comprising:

A plurality of seismographs according to the first aspect of the disclosure; and
A background terminal, coupled to the seismographs and receiving the processed sampled data from the seismographs.

**Brief Description of Drawings**

The drawings illustrate various examples of the aspects of the present disclosure and, together with the description, are used to explain the principles of the present disclosure. Those skilled in the art understand that the specific embodiments shown in the drawings are exemplary and do not intend to limit the scope of the present disclosure. It should be recognized that in some examples, one element can be separated as multiple elements, or multiple elements can be combined into one element. In some examples, an element shown as an internal component of another element can also be implemented as an external component of that other element, and vice versa. In the drawings:

Figure 1 shows the synchronous calibration and acquisition method for a seismograph in the prior art;
Figure 2 shows a seismograph according to an embodiment of the present disclosure;
Figure 3 shows the local clock signal and the reference clock signal according to the present disclosure;
Figure 4 shows a simple block diagram of a method for managing the data acquisition executed by a controller according to an embodiment of the present disclosure;
Figure 5 shows a detailed block diagram of the method for managing the data acquisition executed by the controller according to an embodiment of the present disclosure;
Figure 6 shows a schematic diagram of a distributed seismograph measurement system according to an embodiment of the present disclosure;
Figure 7 shows the internal structure diagram of the controller shown in Figure 2; and
Figure 8 shows the seismic waveforms acquired by multiple seismographs in the seismograph measurement system according to an embodiment of the present disclosure.

**Detailed Description**

As used hereinafter, the terms "have", "include", or "comprise" or any grammatical variants thereof are used in a non-exclusive manner. Therefore, in addition to the features introduced by these terms, these terms can refer to both the situation where there are no other features in the entity described in this context and the situation where there are one or more other features. For example, the expressions "A has B", "A includes B", and "A comprises B" can refer to both the situation where there are no other elements in A except B (that is, the situation where A consists only of B), and the situation where there are one or more other elements (such as element C, elements C and D, or even other elements) in entity A in addition to B.

In addition, it should be noted that terms such as "at least one", "one or more", or similar expressions indicating that a feature or element can exist once or more than once are usually only used once when introducing the feature or element firstly. In the following text, in most cases, when referring to the corresponding feature or element, although the corresponding feature or element can exist once or more than once, the expressions "at least one" or "one or more" will not be repeated.

In addition, as used hereinafter, terms such as "preferably", "more preferably", "particularly", "more particularly", "specifically", "more specifically", or similar terms are used in combination with optional features without limiting alternative possibilities. Therefore, the features introduced by these terms are optional features and are not intended to limit the scope of the claims in any way. As those skilled in the art will recognize, the present disclosure can be implemented by using alternative features. Similarly, the features introduced by expressions such as "in an embodiment of the present disclosure" or similar expressions are intended to be optional features, without any limitation to the alternative embodiments of the present disclosure, without any limitation to the scope of the present disclosure, and without any limitation to the possibility of combining the features introduced in this way with other optional or non-optional features of the present disclosure.

It will also be understood that although terms such as "first", "second", etc. can be used herein to describe various elements, these elements should not be limited by these terms. These terms do not represent an order but are only used to distinguish one element from another.

The following is a detailed description of the specific implementations of the embodiments of the present disclosure with reference to the drawings. It should be understood that the specific implementations described here are only used to explain and illustrate the embodiments of the present disclosure and are not used to limit the present disclosure. Moreover, for the sake of simplicity, only the components closely related to the embodiments of the present application are described in detail below.

First, refer to Figure 2, which shows a seismograph 200 according to an embodiment of the present disclosure. As shown, the seismograph 200 includes a crystal oscillator 210, a data acquisition unit 220, a controller 230, and a reference clock receiver 240. The crystal oscillator 210 is used to independently generate a periodic local clock signal, for example, the clock signal as shown in Figure 3. The upper part of Figure 3 shows the periodic local clock signal generated by the crystal oscillator 210, which is a pulse-timing signal. The crystal oscillator 210 can be, for example, a temperature-compensated crystal oscillator or an oven-controlled crystal oscillator. The data acquisition unit 220 is connected to the crystal oscillator 210 and receives the local clock signal generated by the crystal oscillator 210 as the clock source of the data acquisition unit 220. When the rising edge of the local clock signal arrives, the data acquisition unit 220 are triggered to acquire or sample the seismic data, for example sampling the seismic waves. Whenever the data acquisition unit 220 is triggered, it can acquire a fixed amount of sampled data or signals (for example, one sampled data is generated each time it is triggered, but it is not so limited. For the convenience of description, the following description takes one sampled data or signal generated each time as an example) and output the sampled data or sampled signals. For example, the data acquisition unit 220 can be an analog-to-digital conversion chip (ADC), and the local clock signal generated by the crystal oscillator 210 (such as a temperature-compensated crystal oscillator) is used as the clock source of the analog-to-digital conversion chip.

The analog-to-digital conversion chip is, for example, a 32-bit ADC chip. The crystal oscillator can be, for example, a temperature-compensated crystal oscillator, and its accuracy and relative deviation are represented by PPM. PPM represents parts per million, which indicates how much the frequency of the crystal may deviate from the nominal value. It can be calculated by the following formula:

$$PPM = [(actual\ frequency\text{-}set\ frequency)\ /\ set\ frequency] \times 10^6.$$

The seismograph 200 also includes a controller 230. The controller 230 is coupled to the data acquisition unit 220 and receives the sampled data or signals from the data acquisition unit 220. The controller 230 can store the sampled data or signals in the memory of the controller 230 and count the received sampled data, that is, record the actual amount of received sampled data or signals (which can be simply referred to as the actual amount). In order to facilitate counting and processing of the actual amount of sampled data or signals, the memory can include a storage array, and the controller can store the sampled data or signals in the storage array. The storage array is used to store the sampled data or signals in sequence. The storage location of each sampled data or signals in the storage array can be represented by storage location coordinates. For example, the storage array can be implemented in the form of a table, and the storage location coordinate can be a combination of a row coordinate and a column coordinate. Similarly, the storage array can be implemented by a database, for example relational database (key-value), etc. The storage location coordinate is based on the key-value (key), and the sampled data at respective position is stored as ground truth values, with similar approaches for other cases not elaborated here.

After receiving the sampled data, the controller 230 stores the sampled data in the storage array at the storage location coordinates, i.e. the current position, of the storage array. In particular, for example, in the storage array, if the storage location coordinate of the last stored sampled data is B1, then the current position (i.e., the storage location coordinate) in the storage array is B2. The next received sampled data is stored in the position corresponding to B2 in the storage array. At the same time, the current position B is incremented by 1 and updated to B3, pointing to the next storage position in the storage array.

Continuing to refer to Figure 2, the seismograph 200 also includes a reference clock receiver 240. The reference clock receiver 240 is coupled to the controller 230. The reference clock receiver 240 is configured to receive a reference clock signal from a reference clock source (such as the GPS navigation system, Compass navigation system, GLONASS satellite navigation system, Galileo navigation system, or 5G network, etc.). For example, the reference clock receiver 240 can receive one or more timing signals of the navigation system from various navigation systems (such as receiving one or more GPS timing signals from GPS) or receive one or more 5G timing signals from the 5G communication network. Then, the reference clock receiver 240 sends the received reference clock signal to the controller 230.

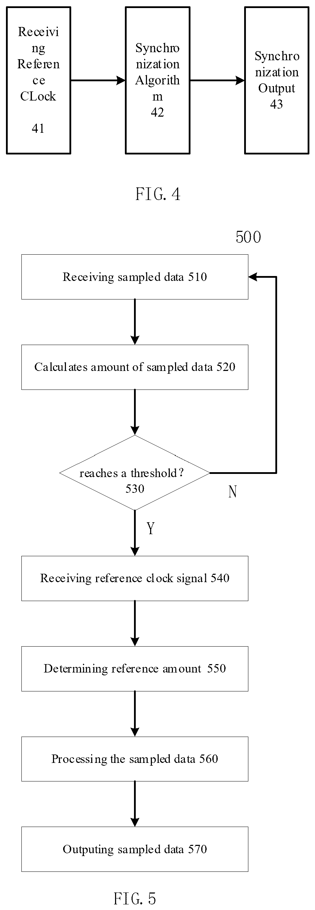

As described above, the data acquisition unit 220 is triggered by the rising edge of the local clock signal to acquire signals, and a fixed amount of sampled data or signals or signals are acquired each time it is triggered. The controller 230 counts the received sampled data or signals to obtain the actual amount of sampled data. As such, the controller 230 can determine the sampling time based on the period of the local clock signal generated by the crystal oscillator 210 and the actual amount of received sampled data or signals. In addition, the controller 230 can periodically start or turn on the reference clock receiver 240 based on the local clock signal (for example, based on certain multiples of the period of the local clock signal, and the certain multiples can refer to the "threshold" depicted in Figure 5), so that the reference clock receiver 240 can receive the reference clock signal from various clock sources, and the controller can receive the reference clock signal from the reference clock receiver 240. Refer to Figure 3. The lower part of Figure 3 shows that the controller 230 periodically (t2-t1) receives the reference clock signal. Then, the controller 230 determines a reference amount of data or signals based on the reference clock signal. The controller processes the received sampled data based on the reference amount of data or signals so that the actual amount of sampled data or signals corresponds to the reference amount of data or signals. For example, it makes them the same, so that the actual amount of sampled data or signals finally output by each seismograph within a preset period is consistent with that of other seismographs, realizing synchronous sampling among multiple seismographs. After the actual amount of sampled data or signals corresponds to the reference amount of data or signals, the reference clock receiver 240 can be turned off or set to a low-power state.

Figure 4 shows a simple block diagram of the method for managing acquired data executed by the controller according to an embodiment of the present disclosure. As shown in Figure 4, the controller receives the data sampled based on the local clock signal, counts the sampled data, and obtains the actual amount of sampled data. Then, in step 41, the controller receives the reference clock signal from the reference clock receiver at regular intervals (t2-t1, refer to Figure 3). In step 42, the controller performs a synchronization algorithm. Specifically, it calculates the reference amount of data based on the reference clock signal and processes the received sampled data based on the reference amount of data to make the amount of the received sampled data correspond to the reference amount of data. Finally, in step 43, the processed sampled data are output.

Compared with the prior-art technical solution in Figure 1, those skilled in the art can understand that the seismograph in the embodiment of the present disclosure does not include an RTC (real-time clock) and does not need to calibrate the RTC through the GPS timing signal. Instead, data synchronization is achieved through an algorithm. Therefore, the technical solution of the present disclosure can significantly reduce power consumption, and through the use of the synchronization algorithm, the same-accuracy acquisition results can be obtained.

Next, refer to Figure 5, which shows a detailed block diagram 500 of the method for managing acquired data by the controller according to an embodiment of the present disclosure. The method starts at 510. At step 510, the controller receives the sampled data from the data acquisition unit. Then, the method 500 proceeds to step 520. The controller stores the sampled data and calculates the amount of sampled data (referred to as the actual amount of sampled data) received since the last time the reference clock receiver was turned on and the reference clock signal was received. At step 530, the controller determines whether the actual amount of sampled data reaches a threshold. If the actual amount of sampled data is less than the threshold, the method 500 returns to step 510, and the controller continues to receive the sampled data. If it is determined at step 530 that the amount of sampled data reaches the threshold, the method 500 proceeds to step 540. At step 540, the controller starts or turns on the reference clock receiver and receives the reference clock signal from the reference clock receiver. The reference clock signal can be, for example, a navigation system timing signal (such as a GPS second-pulse) from a satellite navigation system (such as GPS) or a 5G timing signal from a 5G network, or other timing signals. The method continues to step 550. At step 550, the controller subtracts the newly received reference clock signal (for example, at time t2, refer to Figure 3) from the previous reference clock signal received when the reference clock receiver was started last time (for example, at time t1, refer to Figure 3) to determine the reference time difference, and determines the reference amount of sampled data that should be received based on the reference time difference. For example, assuming that the data acquisition unit should acquire 1000 data per second, and the obtained reference time difference (t2-t1, refer to Figure 3) is 30.00005 minutes. Then the reference amount of sampled data is $30.00005 \times 60 \times 1000 = 1800003$.

Next, the method proceeds to step 560, where the sampled data are processed based on the actual amount and the reference amount of sampled data so that the processed amount of sampled data corresponds to the reference amount, such as aligning them to make them equal. Specifically, if the actual amount of sampled data (simply referred to as the actual amount) is, for example, 1800000, it can be concluded that the amount of sampled data acquired by the data acquisition unit is less than the reference amount that should be acquired, indicating that the crystal oscillator clock is slower than the reference clock. In this situation, the sampled data should be supplemented (3 more data are needed). For example, the missing data (for example, the 3 more data) in the sampled data can be supplemented based on the slope or fitting curve of the already-obtained sampled data, or the missing data can also be supplemented based on the average, median, final value, arithmetic difference, or three-line difference of a specific amount of previous sampled data. If the reference amount determined in step 550 is less than the actual amount of sampled data, indicating the situation where the crystal oscillator clock is faster than the reference clock, the extra sampled data of the actual amount of sampled data should be removed. For example, the extra amount of sampled data can be uniformly removed, randomly removed from the sampled data, or directly sequentially removed from the last-received sampled data. Since the period of the clock signal generated by the crystal oscillator is much smaller than the period of the seismic wave, even if the extra last-received sampled data are directly removed in sequence or the same data as the last-received sampled data are directly added or supplemented, the data accuracy and the final result would not be affected. In addition, if the reference amount determined in step 550 is equal to the actual amount of obtained sampled data, the sampled data can be not processed in step 560. Next, the method proceeds to step 570, and the controller outputs the processed sampled data.

The threshold employed in step 530 is set based on the accuracy of the crystal oscillator, frequency of the crystal oscillator, and the time-synchronization accuracy requirements of the seismograph for signal acquisition. Assuming that the time-synchronization accuracy requirement for the seismograph to acquire signals is 4ms ($4 \times 10^{-3}$ seconds), that is, the deviation between the clock signal of the crystal oscillator and the reference clock signal within a given time period cannot exceed 4ms. The accuracy of the crystal oscillator (such as a temperature-compensated crystal oscillator or an oven-controlled crystal oscillator) is $\pm 2$PPM (i.e., 4PPM, equal to $4 \times 10^{-6}$), that is, 4 pulses deviate for every one million clock pulses. If the frequency of the crystal oscillator (such as a temperature-compensated crystal oscillator or an oven-controlled crystal oscillator) is 1KHZ (kilohertz), then the synchronization error will reach 4ms at $4 \times 10^{-3} / 4 \times 10^{-6} = 1000$ seconds. Therefore, as long as the acquisition period (the time corresponding to the threshold) is smaller than 1000 seconds by a certain value (this value takes into account the startup speed of the reference clock receiver), correspondingly, the threshold in step 530 is smaller than $10^6$ (one million) (because the crystal oscillator frequency is 1KHZ, 1000 sampled data are generated per second, and the sampling period of 1000 seconds corresponds to a threshold of $10^6$) by a certain value. Therefore, as described above, the threshold or the acquisition period is determined based on the accuracy of the crystal oscillator, frequency of the crystal oscillator, and the time-synchronization accuracy requirement of the seismograph for signal acquisition. Therefore, in the method shown in Figure 5, although it is not shown in the figure, there can be an additional step, that is, the controller can automatically adjust the threshold based on the accuracy of the crystal oscillator, frequency of the crystal oscillator, and the time-synchronization accuracy requirement of the seismograph for signal acquisition, or can retrieve the threshold from a lookup table based on the accuracy of the crystal oscillator, frequency of the crystal oscillator, and the time-synchronization accuracy requirement of the seismograph for signal acquisition.

In addition, during the startup phase of the seismograph 200, that is, when starting to acquire data, or after resetting and restarting to acquire data, the reference clock receiver can be started first to receive the corresponding reference clock signal, and data acquisition can start from this reference clock. Therefore, the method described in Figure 5 can also include the step of turning on the reference clock receiver and receiving the corresponding reference clock signal during the startup phase of the seismograph.

Furthermore, the controller can alternatively perform timing based on the local clock signal and compare the timing based on the local clock signal with a time threshold to determine whether to turn on the reference clock receiver.

The method for managing acquired data has been described above with reference to Figure 5. However, those skilled in the art can understand that the above steps are not necessarily executed in sequence. They can be executed simultaneously or in an exchanged order. Or, within the scope of the present disclosure, some steps of the above-mentioned method can be combined into one step, one step can be separated into multiple steps, or some steps can be removed, as long as the method can still solve the technical problems to be solved by the present disclosure.

Referring again to Figure 2 and Figure 5, the controller of the seismograph in Figure 2 can be a single-threaded controller, such as an MCU. When the single-threaded controller executes the method in Figure 5, it needs to use interrupts to receive the sampled data or the reference clock, and process the sampled data. For example, when executing the method described in Figure 5, three types of interrupts can be set for the controller: a sampled data input interrupt (Interrupt 1), a reference clock input interrupt (Interrupt 2), and an alignment interrupt (Interrupt 3). The sampled data input interrupt is caused by the sampled data. When the sampled data arrive, it triggers the sampled data input interrupt. At this time, the controller receives the sampled data and stores them in the storage array.

When the reference clock receiver is turned on and a reference clock (such as a GPS second-pulse) is received from the reference clock receiver, the controller enters the reference clock input interrupt. The controller receives the reference clock signal, determines the actual amount of sampled data at this time (for example, by determining the position coordinates of the latest sampled data in the storage array), and calculates the reference amount of sampled data.

In addition, a timer is set for the alignment interrupt. In the alignment interrupt, respective processing is performed based on the actual amount of sampled data and the reference amount of sampled data.

Among the above-mentioned three interrupts, to ensure data synchronization, the priority of the reference clock input interrupt is the highest.

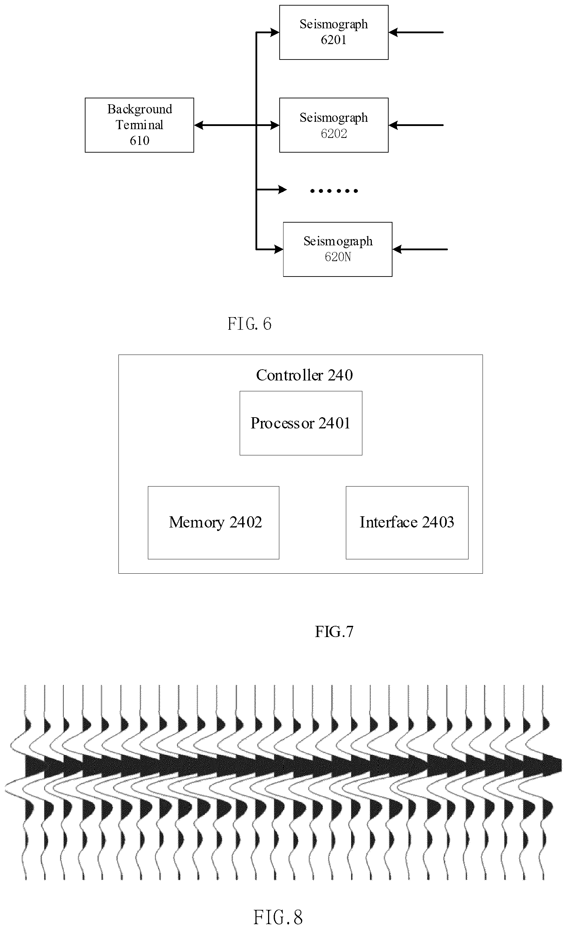

Figure 6 shows a schematic diagram of a distributed seismograph measurement system according to an embodiment of the present disclosure. As shown in Figure 6, the seismograph measurement system includes multiple seismographs 6201, 6202, ..., 620N and a background terminal 610. The background terminal 610 is used to obtain the sampled data or sampled signals transmitted by multiple seismographs and perform various displays, seismic predictions, etc. based on these sampled data or sampled signals. The sampled data or sampled signals can be electrical signals such as voltage values and current values with a certain sequence.

The seismographs are connected to the background terminal 610 through wired or wireless communication, and actively or passively upload the sampled data or sampled signals stored internally and processed in step 560 of Figure 5.

Refer to Figure 8, which shows the seismic wave acquired by multiple seismographs in the seismograph measurement system according to an embodiment of the present disclosure. As shown, each vertical waveform represents a seismic wave acquired by the seismograph of the embodiment of the present disclosure. The seismic waveforms acquired by multiple seismographs are arranged side-by-side in the figure. The horizontal direction represents the amplitude of the seismic wave, and the vertical direction represents time. It can be seen from the figure that by using the seismograph according to the embodiment of the present disclosure, the seismic waves output by the seismographs are highly synchronized. Looking at the horizontal direction in Figure 8, at a same time point, the acquired seismic wave data (such as the corresponding wave peaks or wave valleys) are almost on a straight line, which indicates that the seismic wave data acquired by using the technical solution of the present disclosure achieve high-level synchronization and fully meet the requirements for synchronous acquisition accuracy.

As discussed above, the seismograph samples the seismic signals based on the local clock generated by the crystal oscillator and outputs sampled data. It periodically determines the error in the actual amount of sampled data based on the reference clock signal, and processes the total amount of sampled data by deleting or simulating insertion, etc., so that the amount of sampled data finally output by each seismograph within a given acquisition period (such as 1 second, 15 minutes, 30 minutes, etc., any value) is consistent with that of other seismographs, realizing synchronous sampling among multiple seismographs, ensuring the sampling accuracy of the seismograph, and providing a guarantee for the synchronous accuracy and longer-working-time use of the seismograph during field operations. Since the power consumption of the crystal oscillator when generating a high-frequency clock is much lower than that of the RTC clock module when generating a high-frequency clock, and there is no need to calibrate the RTC clock, the present disclosure can greatly reduce the power consumption during the sampling of the seismograph.

Now refer to Figure 7, which further depicts the controller in Figure 2, the controller 240 includes a processor 2401, a memory 2402, and an interface 2403. The processor 2401 realizes the operations of the controller 240 by executing computer-executable instructions that define the methods shown in Figures 4 and 5. A computer program product including computer-executable instructions can be stored in the memory 2402. The methods described with respect to Figures 4 and 5 can be defined by the computer-executable instructions included in the computer program product stored in the memory 2402 and controlled by the processor 2401 that executes these computer-executable instructions. The interface 2403 can include a network interface for communicating with other devices via a network. This interface can also include other input/output devices (such as a display, keyboard, mouse, speaker, button, touchpad, touch screen, etc.) that enable users to interact with the controller 240. Those skilled in the art will recognize that the implementation of an actual control system may also include other components, and Figure 7 is a high-level representation of some components of such a control system for illustrative purposes.

The memory 2402 includes a tangible non-transitory machine-readable storage medium. It can also include high-speed random-access memory, such as dynamic random-access memory (DRAM), static random-access memory (SRAM), double-data-rate synchronous dynamic random-access memory (DDR RAM), or other random-access solid-state memory devices, and can include non-volatile memory, such as one or more disk storage devices (such as internal hard disks and removable disks), magneto-optical disk storage devices, optical disk storage devices, flash memory devices, semiconductor memory devices (such as erasable programmable read-only memory (EPROM), electrically erasable programmable read-only memory (EEPROM)), compact disc read-only memory (CD-ROM), digital versatile disc read-only memory (DVD-ROM) discs, or other non-volatile solid-state storage devices.

It should be recognized that for the sake of clarity, some features of the present disclosure described in the context of separate embodiments can also be provided in combination in a single embodiment. Conversely, for the sake of simplicity, various features of the present disclosure described in the context of a single embodiment can also be provided separately, in any suitable sub-combination, or appropriately in any other embodiments of the present application. Some features described in the context of various embodiments should not be considered as essential features of those embodiments unless the embodiment is ineffective without those elements.

Although the present application has been described in conjunction with specific embodiments of the present application, it is obvious that many alternatives, modifications, and variations will be apparent to those skilled in the art. Therefore, it is intended to cover all such alternatives, modifications, and variations that fall within the spirit and broad scope of the appended claims.

**Claims**

1. A seismograph, comprising:

   a crystal oscillator configured to generate a local clock signal;
   a data acquisition unit, coupled to the crystal oscillator and configured to acquire sampled data based on the local clock signal, and the data acquisition unit further configured to acquire a fixed amount of sampled data within each period of the clock signal;
   a reference clock receiver configured to receive a reference clock signal; and
   a controller coupled to the data acquisition unit and the reference clock receiver, and configured to:

   receive the sampled data from the data acquisition unit;
   calculate the actual amount of sampled data since the last time the reference clock receiver was started and the previous reference clock signal was received;
   determine whether the actual amount reaches a threshold;
   in response to the actual amount reaching the threshold, start the reference clock receiver and receive a new reference clock signal from the reference clock receiver;
   determine the reference amount of sampled data based on the new reference clock signal and the previous reference clock signal; and
   process the sampled data so that the amount of the processed sampled data corresponds to the reference amount.

2. The seismograph according to claim 1, wherein processing the sampled data comprises:

in response to the actual amount being greater than the reference amount, removing part of the sampled data so that the amount of the processed sampled data is equal to the reference amount;
in response to the actual amount being less than the reference amount, supplementing the sampled data so that the amount of the processed sampled data is equal to the reference amount; and
in response to the actual amount being equal to the reference amount, not processing the sampled data.

3. The seismograph according to claim 2, wherein:

removing the sampled data comprises: uniformly removing the sampled data, randomly removing the sampled data, or sequentially removing the sampled data from the last-received sampled data; and
supplementing the sampled data comprises: supplementing the sampled data based on the slope or fitting curve of the sampled data, or supplementing the sampled data based on the average, median, final value, arithmetic difference, or three-line difference of a specific amount of sampled data.

4. The seismograph according to any one of claims 1-3, wherein the controller is further configured to:
start the reference clock receiver and receive the reference clock signal from the reference clock receiver when the seismograph is started or begins to acquire data.

5. The seismograph according to any one of claims 1-3, wherein the controller is further configured to:
determine the threshold based on accuracy of the crystal oscillator, frequency of the local clock signal generated by the crystal oscillator, and the synchronization accuracy requirements of the seismograph.

6. The seismograph according to any one of claims 1-3, wherein the controller is further configured to: after processing the sampled data so that the amount of the processed sampled data corresponds to the reference amount, turn off the reference clock receiver or put it in a low-power state.

7. The seismograph according to any one of claims 1-3, wherein the crystal oscillator is a temperature-compensated crystal oscillator or an oven-controlled crystal oscillator.

8. The seismograph according to any one of claims 1-3, wherein the reference clock signal is a timing signal of a navigation system or a 5G network timing signal.

9. The seismograph according to any one of claims 1-3, wherein the controller is a single-threaded controller, which receives the sampled data in a first interrupt, receives the reference clock signal in a second interrupt, and determines the processing of the sampled data in a third interrupt, and the priority of the second interrupt is the highest.

10. The seismograph according to any one of claims 1-3, wherein the data acquisition unit is an ADC converter, which is configured to use the local clock signal as a clock source, and the ADC converter is triggered and acquires one sampled data when the rising edge of each clock signal arrives.

11. A method for managing sampled data of a seismograph, comprising:

receiving sampled data, which is acquired by a data acquisition unit based on a local clock signal generated by a crystal oscillator in the seismograph, wherein the amount of sampled data obtained within each period of the local clock signal is fixed;
calculating the actual amount of sampled data since the last time the reference clock receiver was started and the previous reference clock signal was received;
determining whether the actual amount reaches a threshold;
in response to the actual amount reaching the threshold, starting the reference clock receiver to receive a new reference clock signal from the reference clock receiver;
determining a reference amount of sampled data based on the new reference clock signal and the previous reference clock signal; and
processing the sampled data so that the amount of the processed sampled data corresponds to the reference amount.

12. The method for managing sampled data according to claim 11, wherein processing the sampled data comprises:

in response to the actual amount being greater than the reference amount, removing part of the sampled data so that the amount of the processed sampled data is equal to the reference amount;

in response to the actual amount being less than the reference amount, supplementing the sampled data so that the amount of the processed sampled data is equal to the reference amount; and

in response to the actual amount being equal to the reference amount, not processing the sampled data.

13. The method for managing sampled data according to claim 12, wherein:

removing the sampled data comprises: uniformly removing the sampled data, randomly removing the sampled data, or sequentially removing the sampled data from the last-received sampled data; and

supplementing the sampled data comprises: supplementing the sampled data based on the slope or fitting curve of the sampled data, or supplementing the sampled data based on the average, median, final value, arithmetic difference, or three-line difference of a specific amount of sampled data.

14. The method for managing sampled data according to any one of claims 11-13, further comprising:
starting the reference clock receiver and receive the reference clock signal from the reference clock receiver when the seismograph is started or begins to acquire data.

15. The method for managing sampled data according to any one of claims 11-13, further comprising:
determining the threshold based on accuracy of the crystal oscillator, frequency of the local clock signal generated by the crystal oscillator, and the synchronization accuracy requirements of the seismograph.

16. The method for managing sampled data according to any one of claims 11-13, wherein the controller is further configured to: after processing the sampled data so that the amount of the processed sampled data corresponds to the reference amount, turn off the reference clock receiver or put it in a low-power state.

17. The method for managing sampled data according to any one of claims 11-13, wherein the reference clock signal is a timing signal of a navigation system or a 5G network timing signal.

18. The method for managing sampled data according to any one of claims 11-13, wherein the method is executed in a single-threaded manner, the sampled data is received in a first interrupt, the reference clock signal is received in a second interrupt, and the processing of the sampled data is determined in a third interrupt, and the priority of the second interrupt is the highest.

19. A controller, comprising:

A processor; and

A non-transitory machine-readable storage medium having computer program instructions stored thereon, which, when executed by the processor, cause the processor to implement the method according to any one of claims 11-18.

20. A non-transitory machine-readable storage medium having computer program instructions stored thereon, which, when executed by a processor, cause the processor to implement the method according to any one of claims 11-18.

21. A program product having computer program instructions, which, when executed by a processor, cause the processor to implement the method according to any one of claims 11-18.

22. A seismic data acquisition system, comprising:

A plurality of seismographs according to any one of claims 1-10; and

A background terminal, coupled to the seismographs and receiving the processed sampled data from the seismographs.

GPS Timing 11 → RTC Calibration 12 → Synchronous Acquisition 13

FIG. 1

200

Crystal OScillator 210 → Data Acquisition Unit 220 → Controller 230

Reference Clock Receiver 240 →

FIG. 2

Local Clock Signal

Reference Clock Signal

t1          t2

FIG. 3

| Receiving Reference CLock 41 | → | Synchronization Algorithm 42 | → | Synchronization Output 43 |

FIG. 4

500

Receiving sampled data 510

↓

Calculates amount of sampled data 520

↓

reaches a threshold? 530 — N →

Y ↓

Receiving reference clock signal 540

↓

Determining reference amount 550

↓

Processing the sampled data 560

↓

Outputing sampled data 570

FIG. 5

Seismograph
6201

Background
Terminal
610

Seismograph
6202

. . . . . .

Seismograph
620N

FIG. 6

Controller 240

Processor 2401

Memory 2402

Interface 2403

FIG.7

FIG.8

## INTERNATIONAL SEARCH REPORT

| International application No. |
|---|
| **PCT/CN2023/135746** |

| A. | CLASSIFICATION OF SUBJECT MATTER |
|---|---|

G01V 1/00(2024.01)i

According to International Patent Classification (IPC) or to both national classification and IPC

| B. | FIELDS SEARCHED |
|---|---|

Minimum documentation searched (classification system followed by classification symbols)

IPC: G01V1

Documentation searched other than minimum documentation to the extent that such documents are included in the fields searched

Electronic data base consulted during the international search (name of data base and, where practicable, search terms used)

CNTXT, ENTXTC, ENTXT, VEN, CNKI: 地震, 采集, 同步, 授时, 晶振, 本地时钟, 采样, 预定数量, 固定数量, 参考时钟, 控制器, 数据量, 阈值, seismic, acquisition, synchronization, timing, time service, crystal oscillator, sampling, reference, controller, threshold, RTC, GPS

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 105388512 A (CHINA NATIONAL PETROLEUM CORPORATION et al.) 09 March 2016 (2016-03-09) description, paragraphs 6-13 and 26-34 | 1-22 |
| A | CN 101836132 A (FAIRFIELD INDUSTRIES INCORPORATED) 15 September 2010 (2010-09-15) entire document | 1-22 |
| A | CN 103576185 A (ZHANG CHAO) 12 February 2014 (2014-02-12) entire document | 1-22 |
| A | CN 108474863 A (SERCEL) 31 August 2018 (2018-08-31) entire document | 1-22 |
| A | CN 213517583 U (FIRST INSTITUTE OF OCEANOGRAPHY, MINISTRY OF NATURAL RESOURCES) 22 June 2021 (2021-06-22) entire document | 1-22 |
| A | US 2019235127 A1 (MAGSEIS FF LLC) 01 August 2019 (2019-08-01) entire document | 1-22 |

✓ Further documents are listed in the continuation of Box C.    ✓ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 March 2024** | **06 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/135746**

| C. | DOCUMENTS CONSIDERED TO BE RELEVANT | |
|---|---|---|
| Category* | Citation of document, with indication, where appropriate, of the relevant passages | Relevant to claim No. |
| A | WO 2009001227 A1 (AUTOSEIS, INC. et al.) 31 December 2008 (2008-12-31)<br>entire document | 1-22 |

Form PCT/ISA/210 (second sheet) (July 2022)

<table>
<tr><td colspan="2" align="center"><strong>INTERNATIONAL SEARCH REPORT</strong><br>Information on patent family members</td><td colspan="2">International application No.<br><strong>PCT/CN2023/135746</strong></td></tr>
</table>

| Patent document cited in search report | | | Publication date (day/month/year) | Patent family member(s) | | | Publication date (day/month/year) |
|---|---|---|---|---|---|---|---|
| CN | 105388512 | A | 09 March 2016 | None | | | |
| CN | 101836132 | A | 15 September 2010 | RU | 2010115753 | A | 27 October 2011 |
| | | | | RU | 2518857 | C2 | 10 June 2014 |
| | | | | US | 2014086010 | A1 | 27 March 2014 |
| | | | | US | 9562984 | B2 | 07 February 2017 |
| | | | | EP | 2198325 | A2 | 23 June 2010 |
| | | | | EP | 2198325 | A4 | 08 April 2015 |
| | | | | EP | 2198325 | B1 | 23 January 2019 |
| | | | | US | 2017176638 | A1 | 22 June 2017 |
| | | | | US | 10281613 | B2 | 07 May 2019 |
| | | | | US | 2011032798 | A1 | 10 February 2011 |
| | | | | US | 9465124 | B2 | 11 October 2016 |
| | | | | WO | 2009066144 | A2 | 28 May 2009 |
| | | | | WO | 2009066144 | A3 | 08 April 2010 |
| | | | | US | 2009080290 | A1 | 26 March 2009 |
| | | | | US | 8605543 | B2 | 10 December 2013 |
| | | | | EP | 3561549 | A1 | 30 October 2019 |
| | | | | EP | 3561549 | B1 | 26 October 2022 |
| CN | 103576185 | A | 12 February 2014 | None | | | |
| CN | 108474863 | A | 31 August 2018 | US | 2017168180 | A1 | 15 June 2017 |
| | | | | US | 9823368 | B2 | 21 November 2017 |
| | | | | EP | 3391093 | A1 | 24 October 2018 |
| | | | | JP | 2019500603 | A | 10 January 2019 |
| | | | | JP | 6865222 | B2 | 28 April 2021 |
| | | | | WO | 2017103681 | A1 | 22 June 2017 |
| | | | | CA | 3008355 | A1 | 22 June 2017 |
| | | | | CA | 3008355 | C | 16 January 2024 |
| CN | 213517583 | U | 22 June 2021 | None | | | |
| US | 2019235127 | A1 | 01 August 2019 | CA | 2700280 | A1 | 28 May 2009 |
| | | | | CA | 2700280 | C | 08 May 2018 |
| | | | | CA | 2996790 | A1 | 28 May 2009 |
| | | | | CA | 2996790 | C | 08 March 2022 |
| | | | | US | 11327200 | B2 | 10 May 2022 |
| WO | 2009001227 | A1 | 31 December 2008 | None | | | |

Form PCT/ISA/210 (patent family annex) (July 2022)

# EP 4 628 945 A1

**Patent documents cited in the description**

- CN 101836132 A